# EUROPÄISCHE PATENTSCHRIFT

(11) **EP 1 622 744 B1**
(45) Veröffentlichungstag und Bekanntmachung des Hinweises auf die Patenterteilung: **13.10.2010**
(21) Anmeldenummer: 04738527.3
(22) Anmeldetag: 14.05.2004
(51) Int. Cl.: B24B 13/005, B24B 13/00

(54) **VERFAHREN UND VORRICHTUNG ZUR HERSTELLUNG VON REFERENZFL CHE N AN FASSUNGEN OPTISCHER ELEMENTE DURCH EINE SPANENDE BEARBEITUNG SOWIE DAMIT HERGESTELLTE OPTISCHE ELEMENTE**
METHOD AND DEVICE FOR PRODUCING REFERENCE SURFACES ON MOUNTS OF OPTICAL ELEMENTS BY MEANS OF MACHINING, AND THUS PRODUCED OPTICAL ELEMENTS
PROCEDE ET DISPOSITIF DE FABRICATION DE SURFACES DE REFERENCE SUR DES MONTURES D'ELEMENTS OPTIQUES PAR USINAGE ET ELEMENTS OPTIQUES AINSI OBTENUS

(30) Priorität: 15.05.2003 DE 10322587
(43) Veröffentlichungstag der Anmeldung: 08.02.2006
(73) Patentinhaber: Fraunhofer-Gesellschaft zur Förderung der angewandten Forschung e.V., 80686 München (DE)
(72) Erfinder: GUYENOT, Volker, 07749 Jena (DE); DAMM, Christoph, 07743 Jena (DE); GEBHARDT, Andreas, 99510 Apolda (DE); SIEBENHAAR, Christian, 09116 Chemnitz (DE); PESCHEL, Thomas, 07743 Jena (DE)
(74) Vertreter: Pfenning, Meinig & Partner GbR
(86) Internationale Anmeldenummer: PCT/DE2004/001057
(87) Internationale Veröffentlichungsnummer: WO 2004/103638

(56) Entgegenhaltungen:
- WO-A-03/033205
- FR-A- 1 467 460
- US-A- 3 762 821
- US-A- 5 205 076

## Beschreibung

Die Erfindung betrifft ein Verfahren und eine Vorrichtung zur Herstellung von Referenzflächen an Fassungen optischer Elemente durch eine spanende Bearbeitung. Sie kann vorteilhaft für unterschiedlichste, an sich bekannte optische Elemente, die mit hoher Positioniergenauigkeit gegebenenfalls in Bezug zu weiteren optischen Elementen in entsprechend geeigneten Geräten oder auch Halterungen innerhalb solcher Geräte montiert werden müssen, eingesetzt werden.

Solch ein Verfahren und solch eine Vorrichtung nach dem Oberbegriff der Ansprüche 1 bzw. 13 sind aus der Patentschrift US-A-3427 703 bekannt.

So ist es häufig üblich, optische Elemente mit unterschiedlichst gestalteten Halterungen oder Halteelementen, in die die optischen Elemente wiederum unmittelbar eingesetzt werden, in Geräte einzusetzen oder so mehrere optische Elemente zu komplexeren optischen Einheiten zusammenfassend zu montieren.

In anderer an sich bekannter Form werden optische Elemente aber auch mit in der Regel radial außenseitig angreifenden Fassungen miteinander verbunden. So werden die optischen Elemente mit den verschiedensten an sich bekannten Fügeverfahren mit solchen Fassungen verbunden. Unabhängig davon, ob eine solche Verbindung stoffschlüssig, kraft- oder formschlüssig realisiert wird, treten bei einer in dieser Form vorgenommenen Verbindung von optischen Elementen mit Fassungen Positionier- bzw. Justierfehler auf, so dass ein z.B. Verkanten von in Fassungen eingesetzten und mit diesen verbundenen optischen Elementen nicht vermieden werden kann.

Werden nun so gefasste optische Elemente montiert, können diese Fehler nur durch eine aufwändige jeweils individuelle und dementsprechend nur schwer automatisierbare Nachjustierung ausgeglichen werden, was selbstverständlich die Herstellungskosten erheblich in unerwünschter Form beeinträchtigt.

Dieser Nachteil wirkt sich auch verstärkt nachteilig aus, wenn beispielsweise mehrere optische Elemente so montiert werden sollen, dass ihre jeweiligen optischen Achsen miteinander übereinstimmen oder optische Elemente vorhanden sind, an denen optisch wirksame ebene Flächen ausgebildet sind, die in bestimmten Winkeln in Bezug zur jeweiligen optischen Achse, beispielsweise orthogonal zu dieser ausgerichtet sein müssen, miteinander montiert und entsprechend zueinander positioniert werden müssen.

Die Erfindung kann für ein einziges optisches Element, das in einer Fassung gehalten ist, aber auch für mehrere optische Elemente, die in einer gemeinsamen Fassung miteinander gehalten sind, eingesetzt werden.

Außerdem sind Möglichkeiten zum Montieren bzw. Herstellen von Linsen in US 3,762,821 sowie FR 1 467 60 beschrieben.

Das US 5,205,076 betrifft ein Herstellungssystem für selbst justierende Linsen.

Es ist daher Aufgabe der Erfindung Lösungen vorzuschlagen, wie optische Elemente, die mit einer Fassung verbunden sind, mit hoher Positionier- und/oder Justiergenauigkeit für eine nachfolgende Montage zur Verfügung gestellt werden können.

Erfindungsgemäß wird diese Aufgabe mit einem Verfahren, das die Merkmale des Patentanspruchs 1 und für eine Vorrichtung, die die Merkmale des Patentanspruchs 13 aufweist, gelöst.

Vorteilhafte Ausgestaltungsformen und Weiterbildungen der Erfindung können mit den in den jeweils untergeordneten Patentansprüchen bezeichneten Merkmalen erreicht werden.

Bei dem erfindungsgemäßen Verfahren wird so vorgegangen, dass an Fassungen optischer Elemente Referenzflächen durch eine spanende Bearbeitung hergestellt werden. Dabei greift die Fassung an mindestens einem optischen Element radial außen an und fixiert dieses. Diese miteinander verbundene Fassung und das mindestens eine optische Element werden dann in eine Werkstückaufnahme eingesetzt und darin gespannt gehalten. In dieser Position wird dann mit Hilfe mindestens eines optischen Systems der jeweilige Neigungswinkel einer optischen Achse und/oder einer ebenen optisch wirksamen Fläche eines optischen Elementes in Bezug zu den bekannten Achskoordinaten der jeweiligen Werkstückaufnahme bestimmt.

Der eine oder auch mehrere so bestimmte Neigungswinkel wird bzw. werden einer elektronischen Steuerung zugeführt und mit diesen Werten der Vorschub eines Werkzeuges für die spanende Bearbeitung so gesteuert, dass an der Fassung mindestens eine Referenzfläche hergestellt wird, die einen vorgebbaren definierten Winkel in Bezug zur optischen Achse und/oder einer ebenen optisch wirksamen Fläche von optischen Elementen einhält.

Das mindestens eine für die berührungslose Bestimmung des jeweiligen Neigungswinkels eingesetzte optische System ist dabei an einer Seite des jeweiligen optischen Elementes angeordnet und auf die jeweilige optisch wirksame Fläche gerichtet.

Es besteht aber auch die Möglichkeit, zwei solcher optischen Systeme gleichzeitig an sich diametral gegenüberliegenden Seiten von optischen Elementen anzuordnen. Das eine oder auch zwei optische System(e) ist/sind dabei, wie dies bereits mit dem Ausdruck "berührungslos" zum Ausdruck gebracht worden ist, in einem Abstand zur jeweiligen optisch wirksamen Fläche von optischen Elementen angeordnet. So können optische Systeme seitlich neben optischen Elementen, aber auch ober- und/oder unterhalb angeordnet sein.

In dieser Form kann beispielsweise an einer Fassung für optische Elemente eine in einer Ebene angeordnete Referenzfläche ausgebildet werden.

Häufig ist es aber gewünscht, mit einer oder auch mehreren solcher Referenzflächen mehrere Ebenen abzudecken, deren Winkelausrichtung in Bezug zur optischen Achse oder einer ebenen optisch wirksamen Fläche eine bestimmte Winkellage aufweisen, herzustellen.

Dies kann durch mehr als eine Referenzfläche an einer Fassung erreicht werden, wobei in diesem Fall drei solcher Referenzflächen, die wiederum bevorzugt radial außen in jeweils äquidistanten Winkelabständen an der Fassung ausgebildet sein sollten.

Solche Referenzflächen können jeweils als ebene Flächen, aber auch in Form bestimmter definiert gekrümmter Referenzflächen, wobei eine konvexe Krümmung wiederum zu bevorzugen ist, hergestellt werden.

Es besteht aber auch die Möglichkeit eine in Gänze entsprechend gekrümmte umlaufende Referenzfläche herzustellen.

Dies kann dadurch erreicht werden, dass die Werkstückaufnahme mit Fassung und optischem Element drehbar gelagert und der jeweilige Neigungswinkel bei vorgebbaren Drehwinkeln bestimmt und der Vorschub des Werkzeuges für die spanende Bearbeitung bei dieser in Abhängigkeit des entsprechend drehwinkelabhängig ermittelten Neigungswinkels gesteuert wird. So kann der jeweilige Neigungswinkel in relativ kleinen Drehwinkelabständen bestimmt und durch eine entsprechende Steuerung des Werkzeuges für den jeweiligen Azimutwinkel ein definierter Werkstoffabtrag an der Fassung für die Herstellung einer oder auch, wie bereits angesprochen, mehrerer Referenzflächen erreicht werden.

So können Referenzflächen mit unterschiedlichster geometrischer Gestalt hergestellt werden. Beispiele sind Kegelstumpf- oder Pyramidenstumpfformen, wobei diese Referenzflächen dann in bestimmten definierten Winkeln in Bezug zu einer optischen Achse und/oder einer ebenen optisch wirksamen Fläche von optischen Elementen ausgerichtet sind. Außerdem besteht die Möglichkeit mittels Referenzflächen auch unterschiedlichste Querschnittsgeometrien an einer Fassung auszubilden. So können bevorzugt durch spanende Bearbeitung am radial äußeren Rand der Fassung z.B. drei- oder mehreckige Querschnittsformen ausgebildet werden.

Vorteilhaft ist es aber, Referenzflächen in Zylinderform am radial äußeren Rand einer Fassung herzustellen, die rotationssymmetrisch um die jeweilige optische Achse eines optischen Elementes ausgebildet oder deren äußere Mantelfläche orthogonal zu einer ebenen optisch wirksamen Fläche eines optischen Elementes ausgerichtet sind. Solche Fassungen können dann sehr einfach mit hoher Positionier- und Justiergenauigkeit in ein hohlzylinderförmiges Gehäuse oder Element eingesetzt werden.

Es besteht aber auch die Möglichkeit, weitere Referenzflächen an einer Fassung durch eine spanende Bearbeitung unter Berücksichtigung des vorab bestimmten Neigungswinkels herzustellen, die wiederum in einem bestimmten, vorgebbaren Winkel zu der einen oder auch mehreren bereits vorab hergestellten Referenzfläche(n) ausgerichtet sind. Vorteilhaft ist es hierbei, mindestens eine weitere solche Referenzfläche orthogonal zu einer oder mehreren Referenzfläche(n) herzustellen. Eine solche Referenzfläche kann dann orthogonal zur jeweiligen optischen Achse oder parallel zur jeweiligen ebenen optisch wirksamen Fläche ausgerichtet sein und beispielsweise für eine nachfolgende Montage einen definierten Anschlag bilden.

Mindestens eine Referenzfläche kann aber auch, bevorzugt am radial äußeren Rand der Fassung an einem vorgebbaren Azimutwinkel ausgebildet werden.

Solche Referenzflächen können dann eine gewünschte Winkellage eines später montierten bzw. eingebauten optischen Elementes sichern, so dass beispielsweise die Polarisationseigenschaften optischer Elemente berücksichtigt werden können.

Hierfür ausgebildete Referenzflächen können als eine oder mehrere ebene(n) Fläche, aber auch in Keil- oder Nutenform gestaltet sein.

Der jeweils zu bestimmende Neigungswinkel kann mit Hilfe eines oder auch zweier optischer Systeme dadurch bestimmt werden, dass die Dezentrierung des Krümmungsmittelpunktes mindestens einer gekrümmten optisch wirksamen Oberfläche bestimmt wird. Eine solche optisch wirksame Oberfläche kann dabei konvex oder auch konkav gekrümmt sein, wobei hierbei die Bestimmung des jeweiligen Neigungswinkels bei den verschiedenen Drehwinkeln, wie dies bereits vorab angesprochen worden ist, erfolgen sollte.

Eine drehwinkelabhängige Bestimmung von Neigungswinkeln ist aber auch dann vorteilhaft, wenn Neigungswinkel unter Verwendung von Marken, die auf einer jeweiligen optisch wirksamen Fläche angebracht worden sind, bestimmt werden sollen.

Eine solche Marke sollte möglichst lösbar an der jeweiligen optisch wirksamen Fläche angebracht werden.

In beiden Fällen erfolgt eine Rotation der Fassung mit dem optischen Element um 360°. Die Abbildung eines so genannten Schlagkreises auf dem optischen System und aus dessen Durchmesser kann beispielsweise das Maß einer unerwünschten Dezentrierung des mit der Fassung verbundenen optischen Elementes und dementsprechend der jeweilige Neigungswinkel, der für die Steuerung des Vorschubes für das Werkzeug, mit dem die spanende Bearbeitung durchgeführt wird, ermittelt und benutzt werden kann.

Die Bestimmung des Neigungswinkels kann aber auch während der spanenden Bearbeitung weiter durchgeführt werden und die entsprechend ermittelten Daten können für die weitere Steuerung des Vorschubs für das Werkzeug genutzt werden. So können beispielsweise auch bei der spanenden Bearbeitung auftretende zu Fehlern führende Einflüsse, beispielsweise eine Temperaturdrift, kompensiert werden.

Die eingesetzten optischen Systeme können so angeordnet werden, dass ihre jeweilige optische Achse mit der Rotationsachse der Werkstückaufnahme übereinstimmt. Die optischen Systeme sollten aus einer abbildenden Optik und aus einem ortsaufgelöst messenden optischen Detektor, beispielsweise mindestens einer CCD-Zeile, einem CCD-Array oder in CMOS-Technik ausgebildet sein.

Die optischen Systeme sollten sichern, dass außerhalb der optischen Achse eine ausreichend signifikante Abbildung beispielsweise eines Krümmungsmittelpunktes oder einer Marke erreichbar ist, um mittels des ortsaufgelöst messenden Detektors eine Dezentrierung oder Verkantung des jeweiligen optischen Elementes mit ausreichend hoher Genauigkeit erfassen zu können.

Als abbildende Optiken können bevorzugt durchstimmbare Autokollimationsfernrohre, die auch als Reflexbildgeräte bezeichnet werden können, eingesetzt werden. Dabei sollen auftretende Aberrationen berücksichtigt und ein Objektiv mit hoher Apertur eingesetzt werden.

Diese Probleme können aber dadurch reduziert oder kompensiert werden, wenn die jeweilige optische Achse des optischen Systems in Übereinstimmung mit der optischen Achse des jeweiligen optischen Elementes oder orthogonal auf eine ebene optische wirksame Fläche ausgerichtet wird. Dies kann durch ein geeignetes Verschwenken oder Verschieben der eingesetzten optischen Systeme erreicht werden, so dass ein entsprechend ausgerichtetes optisches System zumindest annähernd die Funktion eines "Nullpunktsensors" erfüllen kann.

Vor Beginn der spanenden Bearbeitung sollte eine Ausrichtung des jeweiligen optischen Systems in Bezug zum jeweiligen optischen Element durchgeführt werden. Des Weiteren können die entsprechenden Achskoordinaten und insbesondere die Sollposition des Werkstücks, also der Fassung mit optischem Element als Datensatz für die Steuerung des spanenden Werkzeuges, benutzt werden.

Mit entsprechend geeigneten optischen Systemen kann aber auch der Neigungswinkel von Polarisationsachsen oder Polarisationsebenen optischer Elemente für die Herstellung an Referenzflächen berücksichtigt werden. So besteht die Möglichkeit, Referenzflächen durch spanende Bearbeitung ausschließlich unter Berücksichtigung des tatsächlichen Neigungswinkels solcher Polarisationsachsen oder Polarisationsebenen vorzunehmen.

Es ist aber auch denkbar, wie dies bereits angedeutet worden ist, für die Bestimmung von Neigungswinkeln zwei optische Systeme an sich gegenüberliegenden Seiten optischer Elemente anzuordnen, wobei in diesem Falle dann ein optisches System zur Erfassung eines Neigungswinkels einer optischen Achse oder einer ebenen optisch wirksamen Fläche und das jeweils andere optische System zur Erfassung des Neigungswinkels von Polarisationsachsen oder Polarisationsebenen genutzt werden kann.

Optische Systeme können aber auch so ausgebildet sein, dass mittels entsprechend geeigneten optischen Detektoren zum einen der Neigungswinkel optischer Achsen oder ebener optisch aktiver Flächen und zum anderen der Neigungswinkel von Polarisationsachsen oder -ebenen mit einem optischen System bestimmt werden können.

Die spanende Bearbeitung kann vorzugsweise durch Drehen durchgeführt werden, Fräsen und/oder Schleifen sind aber auch möglich.

Wird für die spanende Bearbeitung ein Drehwerkzeug eingesetzt, ist die Ausbildung von konvex gekrümmten Referenzflächen einfach erreichbar, wobei man dann beispielsweise bei einem verkanteten bzw. verkippten in einer Fassung gehaltenen optischen Element vom so genannten "Schiefdrehen" sprechen kann. Das "Drehen" gestattet aber auch direkt die Erzeugung von Referenzflächen in Form von einer oder mehrerer Planflächen und anderer Flächen nahezu beliebiger Form.

Mehrere radial außen an einer Fassung auszubildende Referenzflächen können insbesondere dann, wenn sie eben ausgebildet werden sollen, bevorzugt durch Fräsen hergestellt werden.

Insbesondere Referenzflächen, die orthogonal zu einer optischen Achse eines optischen Elementes oder parallel zu einer ebenen optisch wirksamen Fläche ausgerichtet sein sollen, können in Form eines Kreisringes oder auch in Form von Kreisringsegmenten an einer Fassung ausgebildet werden.

Bei der spanenden Bearbeitung wird eine Fassung hergestellt, die mindestens eine Referenzfläche aufweist, die die tatsächliche Achsausrichtung von optischen Achsen optischer Elemente oder der Ausrichtung einer ebenen optisch wirksamen Fläche berücksichtigt.

Wird eine rotationssymmetrische Referenzfläche beispielsweise durch Drehen hergestellt, werden die Steuerung des Werkstückvorschubes, die entsprechenden Messwerte für den jeweiligen Neigungswinkel des optischen Elementes und dem Drehwinkel an Werkstückaufnahme mit Fassung und optischen Element für die Steuerung des zweiachsigen Vorschubs des Werkzeuges benutzt, so dass dieser bei der spanenden Bearbeitung bei jeweils einer Umdrehung der Werkstückaufnahme in Abhängigkeit des jeweiligen Drehwinkels der Werkstückaufnahme das Werkzeug vor und zurück bewegt und so der jeweilige Werkstoffabtrag drehwinkelabhängig gesteuert wird. Gleichzeitig wird der Werkzeugvorschub unter Berücksichtigung der vorab bereits bekannten und der mittels der optischen Systeme und einem Drehwinkelsensor an der Werkstückaufnahme bestimmten Achskoordinaten auch in einer zweiten Achse, die wiederum orthogonal zu der vorab erläuterten Achse ausgerichtet ist, gesteuert.

Wird beispielsweise eine rotationssymmetrische Referenzfläche radial außen an einer Fassung von optischen Elementen durch eine spanende Bearbeitung hergestellt, können die rms-Werte der jeweiligen Fassung vernachlässigt werden, da lediglich die Form der Referenzfläche einen entsprechenden Einfluss ausüben kann. Der tragende Flächenanteil einer solchen Referenzfläche sollte jedoch mindestens so groß sein, dass bei einer nachfolgenden Montage und während des Gebrauchs innerhalb eines Hohlzylinders keine Ausrichtungs- bzw. Positionsveränderungen mehr auftreten können.

Neben den bereits in der Beschreibungseinleitung erwähnten durch Fügen miteinander verbundenen optischen Elementen mit Fassungen können aber auch optische Elemente, bei denen eine Fassung bereits integraler Bestandteil ist, mittels einer erfindungsgemäßen Vorrichtung und dem entsprechenden Verfahren hergestellt werden. Solche Elemente, die beispielsweise aus Kunststoff in einem Spritzgussverfahren hergestellt worden sind, fallen dementsprechend auch unter die erfindungsgemäße Lösung.

So können herstellungsbedingte Fehler durch die entsprechend spanende Bearbeitung im Nachgang korrigiert werden.

Die erfindungsgemäße Lösung kann für unterschiedliche optische Elemente, wie optische Linsen (z.B. bi-konvex oder -konkav, aber auch plankonvex oder plankonkav), optische Prismen, Strahlteiler, optische Filter, optische Fenster, planparallele Platten, optische Gitter, Spiegel, Lichtquellen, Lichtwellenleiter oder optoelektronische Elemente (z.B. ein optischer Sensor oder eine LCoS-Anordnung) benutzt werden.

Nachfolgend soll die Erfindung weiter beispielhaft erläutert werden.

Dabei zeigen:
- Figur 1: in schematischer Form ein Beispiel für eine erfindungsgemäße Vorrichtung;
- Figur 2: in schematischer Form die Abbildung eines Schlagkreises auf einem ortsaufgelöst mes- senden optischen Detektor und
- Figur 3: eine perspektivische Darstellung eines Bei- spiels für ein erfindungsgemäß herstellba- res optisches Element.

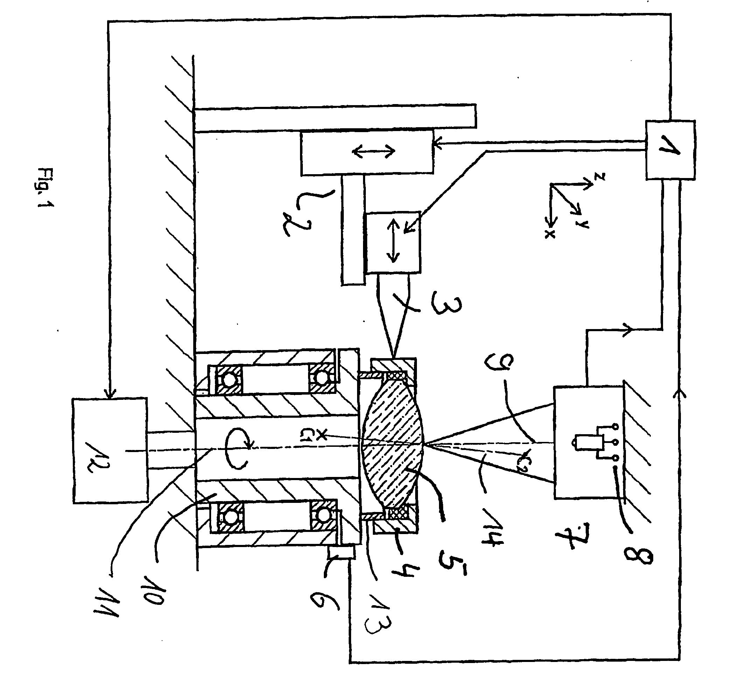

In Figur 1 ist ein Beispiel einer erfindungsgemäßen Vorrichtung zur Herstellung einer Referenzfläche 4' an einer Fassung 4 für ein optisches Element 5, hier eine bi-konvex gekrümmte optische Linse dargestellt.

Die Fassung 4 und das optische Element 5 sind miteinander verbunden und werden quasi in Form eines Halbzeuges in die Werkstückaufnahme 13 aufgenommen und darin gespannt gehalten. Die Ausrichtung des optischen Elementes 5 in der Fassung 4 muss dabei nicht bekannt sein und es kann, wie auch aus der Darstellung gemäß Figur 1 sichtbar wird, eine schräg geneigte Lage der optischen Achse 14 des optischen Elementes 5 vorliegen. Der Neigungswinkel der optischen Achse 14 ist dabei in der Regel nicht bekannt.

Durch die erfindungsgemäße Vorgehensweise wird dann der Neigungswinkel der optischen Achse 14 des optischen Elementes 5 durch eine spanende Bearbeitung an der Fassung 4 ausgeglichen.

Die äußere Mantelfläche der Fassung 4 wird bei diesem Beispiel quasi "schief" gedreht, so dass die Achsen einer solchen schief gedrehten äußeren Mantelfläche, die dann auch die Referenzfläche 4' bildet, parallel zur optischen Achse 14 um die gesamte Fassung 4 umlaufend, parallel ausgerichtet ist.

In nicht dargestellter Form besteht aber auch die Möglichkeit, die äußere Mantelfläche der Fassung 4 als Konus zu drehen, wobei der umlaufende Konuswinkel an jedem Punkt einer solchen Referenzfläche 4' im jeweils gleichen Winkel in Bezug zur optischen Achse 14 des optischen Elementes 5 geneigt ist.

In dieser Form können die beim Fügen von Fassung 4 und optischem Element 5 aufgetretenen Justier- und Positionierfehler ausgeglichen werden.

Bei dem Beispiel, wie es in Figur 1 gezeigt ist, ist die Werkstückaufnahme 13 mit Fassung 4 und optischem Element 5 drehbar gelagert und für deren Drehung eine Hohlspindel 10 mit einem Hohlspindelantrieb 12 vorhandeln. Die Hohlspindel 10 sollte in Präzisionslagerungen mit Laufgenauigkeiten im Sub-Mikrometer-Bereich, beispielsweise als aerostatische Lagerung ausgebildet sein. An der Hohlspindel'10 bzw. der Werkstückaufnahme 13 ist ein Drehwinkelsensor 6 mit hoher Winkelauflösung, die zumindest kleiner als 5° ist, angeordnet und wie auch der Spindelantrieb 12 an eine elektronische Steuerung 1 angeschlossen.

Bei diesem Beispiel ist lediglich ein optisches System 7 zur Erfassung des Neigungswinkels der optischen Achse 14 vorhanden und oberhalb des optischen Elements 5 angeordnet.

In nicht dargestellter Form ist es aber auch möglich, ein solches optisches System 7 allein oder zusätzlich unterhalb des optischen Elementes 5 anzuordnen und den Neigungswinkel durch die Hohlspindel 10 zu bestimmen.

Der Neigungswinkel der optischen Achse 14 des optischen Elementes 5 kann bei gleichzeitiger Drehung der Hohlspindel 10 für jeden Drehwinkel mit vorgebbaren Drehwinkelabständen ermittelt und als Datensatz in die elektronische Steuerung 1 übertragen werden.

Hierfür ist ein ortsaufgelöst messender optischer Detektor 8 in das optische System integriert, von dem zu jedem Drehwinkel, der mit dem Drehwinkelsensor 6 auf die elektronische Steuerung 1 übertragen worden ist, ein bestimmter Neigungswinkel der optischen Achse 14 ermittelt und dem entsprechenden Datensatz zugefügt wird.

Bei dem in Figur 1 gezeigten Beispiel ist das optische System 7 so angeordnet und ausgerichtet, dass eine optische Achse 9 mit der Rotationsachse 11 der Hohlspindel 10 koinzidiert.

An einem gemeinsamen Maschinentisch für die Werkstückaufnahme 13 mit den für die Drehung von Fassung 4 mit optischem Element 5 erforderlichen Teilen ist auch ein zweiachsiger Vorschub 2 für ein Drehwerkzeug 3 vorhanden, der wiederum an die elektronische Steuerung 1 angeschlossen ist und von ihr gesteuert wird.

So wird beispielsweise unter Berücksichtigung des Datensatzes mit den bekannten Achskoordinaten für die Werkstückaufnahme 13 die drehwinkelabhängigen Neigungswinkel der optischen Achse 14 der Vorschub 2 in X-Achsrichtung gesteuert, so dass er für einen gezielten Werkstoffabtrag an der radial äußeren Mantelfläche der Fassung 4 in X-Achsrichtung hin- und herbewegt wird und dabei quasi einen sinusförmigen Weg zurücklegt.

Gleichzeitig werden aber auch die Achskoordinaten für die Z-Achse berücksichtigt, um eine parallel zur optischen Achse 14 ausgerichtete am äußeren Rand der Fassung 14 umlaufende Referenzfläche 4' herzustellen.

In ebenfalls nicht dargestellter Form kann aber der gesamte mechanische Aufbau einer solchen Vorrichtung auch um 90° gedreht eingesetzt werden, so dass die Rotationsachse 11 der Hohlspindel 10 dann horizontal ausgerichtet sein kann.

Mit einem hier nicht explizit gezeigten durchstimmbaren (durchfokussierbaren) Autokollimationsfernrohr, als ein Beispiel für eine geeignete abbildende Optik eines optischen Systems 7 kann der Neigungswinkel der optischen Achse 14 des optischen Elementes 5 für die jeweiligen Drehwinkel durch entsprechende Abbildung von Krümmungsmittelpunkten C₁ oder C₂ auf dem ortsaufgelöst messenden optischen Detektor 8 bestimmt werden.

Stimmen die optische Achse 9 des optischen Systems 7 und die Rotationsachse 11 für die Hohlspindel 10 nicht überein, muss der entsprechende Versatz oder der entsprechende Neigungswinkel zwischen diesen beiden bekannt sein und für die Steuerung des Vorschubs 2 berücksichtigt werden.

Nach dem Spannen von Fassung 4 und optischem Element 5 in der Werkstückaufnahme 13 wird dann der Neigungswinkel der optischen Achse 14 für die unterschiedlichen Drehwinkel bei Drehung von Werkstückaufnahme 13 mit Fassung 4 und optischem Element 5 ermittelt und für jeden Drehwinkel der entsprechende Neigungswinkel in der elektronischen Steuerung 1 eingespeichert.

Dies kann beispielsweise so erfolgen, dass bei der Drehung der Hohlspindel 10 die Abbildungen des Reflexbildes des Krümmungsmittelpunktes C2 der unteren konvex gekrümmten optisch wirksamen Fläche des optischen Elementes 5 in Form eines Schlagkreises 15 für die jeweiligen Drehwinkel auf dem ortsaufgelöst messenden optischen Detektor 8 als Messsignale für den jeweiligen drehwinkelabhängigen Neigungswinkel der optischen Achse 14 erfasst und der elektronischen Steuerung 1 zugeführt werden.

Würde im Falle der in Figur 1 gezeigten bi-konvexen Linse als optisches Element 5 eine optische Linse mit einer konkav gekrümmten optisch wirksamen Oberfläche eingesetzt werden, könnte dann deren Krümmungsmittelpunkt für die Bestimmung der jeweiligen Neigungswinkel genutzt werden.

Mit einem in Figur 1 nicht dargestellten und unterhalb des optischen Elementes 5 angeordneten zweiten optischen System 7 könnte dann der Neigungswinkel der optischen Achse 14 mittels des Krümmungsmittelpunktes C1 der oberen konvex gekrümmten Fläche des optischen Elementes 5 ermittelt werden.

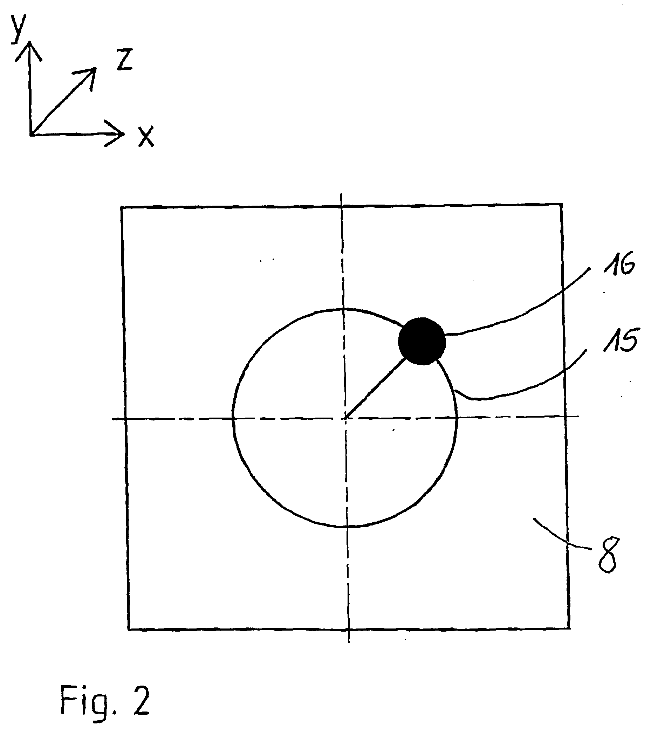

Mit Figur 2 soll in schematischer Form die Möglichkeit der Bestimmung der drehwinkelabhängigen Neigungswinkel der optischen Achse 14 durch Abbildung eines Schlagkreises 15 bei der Rotation von Fassung 4 und optischen Element 5 auf dem ortsaufgelöst messenden optischen Detektor 8 eines punktförmigen Reflexbildes 16 oder einer Abbildung einer auf einer Oberfläche des optischen Elementes 5 angebrachten oder dort vorhandenen Marke, verdeutlicht werden. Solche Marken können z.B. am optischen Element 5 vorhandene optisch wirksame Bereiche oder Elemente, wie z.B. Linien optischer Gitter sein.

Der Mittelpunkt des Schlagkreises 15 stimmt hierbei mit der optischen Achse 9 des optischen Systems 7 sowie der Rotationsachse 11 der Hohlspindel 10 überein.

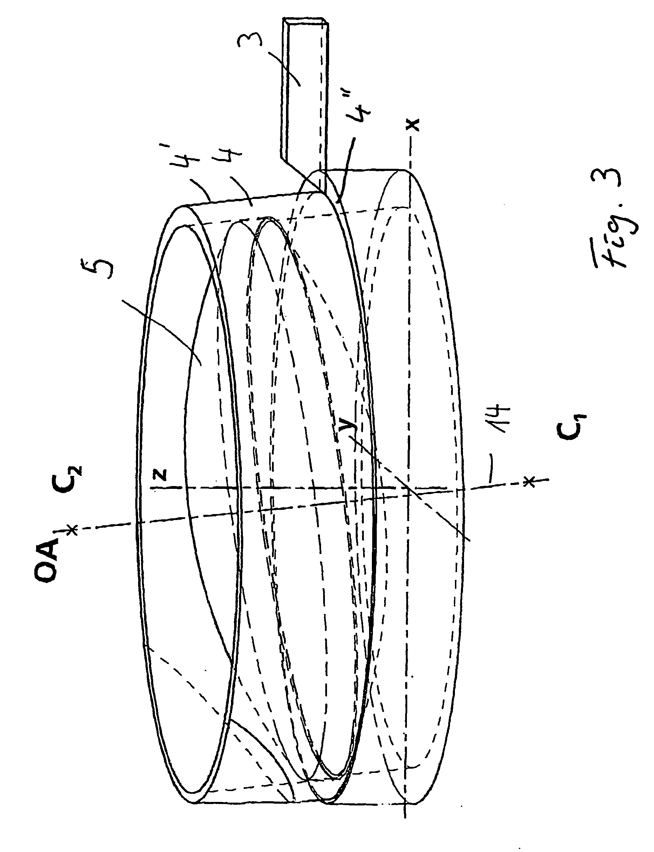

In Figur 3 ist in leicht übertriebener Form gezeigt, wie in einer Fassung 4 ein entsprechendes optisches Element 5 geführt gehalten wird und dabei die optische Achse 14 des optischen Elementes 5 in einem Neigungswinkel in Bezug zur Z-Achse einer Vorrichtung, wie sie beispielhaft in Figur 1 gezeigt ist, geneigt ist.

Dieser Neigungswinkel zwischen optischer Achse 14 und Z-Achse soll durch die spanende Bearbeitung mit dem Werkzeug 3 an der radial äußeren Mantelfläche ausgeglichen werden und mit dem Werkzeug 3 wird quasi der radial äußere Rand der Fassung 4 in entsprechend schräg geneigten Winkeln schief abgedreht, so dass am fertigen Element die Referenzfläche 4' und die optische Achse 14 parallel zueinander ausgerichtet sind.

Durch entsprechende Steuerung des Vorschubs 2 für das Werkzeug 3 in Z- und X-Achsrichtung kann eine zweite Referenzfläche 4" an der Fassung 4 hergestellt werden, die bei dem hier gezeigten Beispiel wiederum um die gesamte Fassung 4 umlaufend, in Form eines Kreisringes und in einer Ebene, die exakt orthogonal zur optischen Achse 14 des optischen Elementes 5 ausgerichtet ist, hergestellt werden.

Eine solche zweite Referenzfläche 4" kann dann beispielsweise einen Anschlag beim Einsetzen von Fassung 4 mit optischem Element 5 in einen Hohlzylinder oder einen Hohlzylinder aufweisende Aufnahme sein.

## Patentansprüche

1. Verfahren zur Herstellung von Referenzflächen an Fassungen optischer Elemente durch eine spanende Bearbeitung,
wobei die Fassung an optischen Elementen radial außen angreift und die optischen Elemente fixiert,
**dadurch gekennzeichnet, dass** zur Herstellung von Referenzflächen (4'), die mit vorgebbaren Winkeln in Bezug zur optischen Achse (14) und/oder einer ebenen Fläche von optischen Elementen (5) ausgerichtet sind,
der Neigungswinkel der optischen Achse (14) und/oder der ebenen Fläche der jeweiligen optischen Elemente (5)
in Bezug zu Achskoordinaten eines spanenden Werkzeugs (3), mit einem zweiachsigen Vorschub (2) und einer Werkstückaufnahme (13) für Fassung (4) mit optischem Element(en) (5)
mittels mindestens eines an einer Seite des/der optischen Elemente(s) (5) angeordneten optischen Systems (7) berührungslos bestimmt und
der Vorschub (2) des Werkzeuges (3) unter Berücksichtigung des bestimmten Neigungswinkels zur Herstellung der Referenzfläche (4') gesteuert wird.

2. Verfahren nach Anspruch 1,
**dadurch gekennzeichnet, dass** die Werkstückaufnahme (13) mit Fassung (4) und optischem Element (5) drehbar gelagert und der Neigungswinkel bei vorgebbaren Drehwinkeln bestimmt und der Vorschub (2) des Werkzeuges (3) drehwinkelabhängig gesteuert wird.

3. Verfahren nach Anspruch 1 oder 2,
**dadurch gekennzeichnet, dass** mindestens drei Referenzflächen radial außen in jeweils äquidistanten Winkelabständen an der Fassung (4) ausgebildet werden.

4. Verfahren nach einem der vorhergehenden Ansprüche, **dadurch gekennzeichnet, dass** zylinder-, kegelstumpf- oder pyramidenstumpfförmige Referenzflächen (4') oder Fassungen mit drei- oder mehreckigen äußeren Querschnittsformen ausgebildet werden.

5. Verfahren nach einem der vorhergehenden Ansprüche, **dadurch gekennzeichnet, dass** eine orthogonal zur Referenzfläche (4') ausgerichtete zweite Referenzfläche ausgebildet wird.

6. Verfahren nach einem der vorhergehenden Ansprüche, **dadurch gekennzeichnet, dass** der Neigungswinkel der optischen Achse (14) durch Bestimmung der Dezentrierung des Krümmungsmittelpunktes (c₁, C₂) mindestens einer gekrümmten optisch wirksamen Oberfläche bestimmt wird.

7. Verfahren nach einem der vorhergehenden Ansprüche, **dadurch gekennzeichnet, dass** der Neigungswinkel mittels einer auf einer optisch wirksamen Fläche angebrachten Marke und durch Drehung von Fassung (4) und optischem Element (5) bestimmt wird.

8. Verfahren nach einem der vorhergehenden Ansprüche, **dadurch gekennzeichnet, dass** das optische System (7) zur und/oder bei der Bestimmung des Neigungswinkels verschoben und/oder verschwenkt wird.

9. Verfahren nach einem der vorhergehenden Ansprüche, **dadurch gekennzeichnet, dass** das optische System (7) in Bezug zur Drehachse (11) der Werkstückaufnahme (13) oder in Bezug zur optischen Achse (14) verschoben oder verschwenkt wird.

10. Verfahren nach einem der vorhergehenden Ansprüche, **dadurch gekennzeichnet, dass** der Neigungswinkel mit einem ortsaufgelöst messenden optischen Detektor (8), der Bestandteil des optischen Systems (7) ist, bestimmt wird.

11. Verfahren nach einem der vorhergehenden Ansprüche, **dadurch gekennzeichnet, dass** Referenzfläche(n) (4') in Bezug zu einer Polarisationsachse oder Polarisationsebene eines optischen Elementes ausgerichtet hergestellt wird/werden.

12. Verfahren nach einem der vorhergehenden Ansprüche, **dadurch gekennzeichnet, dass** die spanende Bearbeitung durch Drehen, Fräsen und/oder Schleifen durchgeführt wird.

13. Vorrichtung zur Herstellung von Referenzflächen an Fassungen optischer Elemente durch eine spanende Bearbeitung, wobei die Referenzflächen einen vorgebbaren Winkel in Bezug zur optischen Achse und/oder einer ebenen Fläche von optischen Elementen aufweisen,
**dadurch gekennzeichnet, dass** eine Fassung (4) mit optischem Element (5) mit einer Werkstückaufnahme (13) gespannt gehalten ist und
bei bekannten Achskoordinaten der gespannten Fassung (4) mit optischem Element (5) mittels mindestens eines an einer Seite des optischen Elementes (5) angeordneten optischen Systems (7) der Neigungswinkel der optischen Achse (14) und/oder der ebenen Fläche berührungslos bestimmbar ist und
das optische System (7) den/die bestimmten Neigungswinkel auf eine elektronische Steuerung (1) der Vorrichtung, zur Steuerung des Vorschubes (2) eines Spanwerkzeuges (3) überträgt.

14. Vorrichtung nach Anspruch 13,
**dadurch gekennzeichnet, dass** das optische System (7) aus einem abbildenden optischen Teil und einem ortsaufgelöst messenden optischen Detektor (8) gebildet ist.

15. Vorrichtung nach Anspruch 13 oder 14,
**dadurch gekennzeichnet, dass** ein durchstimmbares Autokollimationsfernrohr Bestandteil des optischen Systems (7) ist.

16. Vorrichtung nach einem der vorhergehenden Ansprüche 13 bis 15, **dadurch gekennzeichnet, dass** an der Werkstückaufnahme (13) ein drehbar gelagertes Werkstückspindelsystem vorhanden ist.

17. Vorrichtung nach einem der vorhergehenden Ansprüche 13 bis 16, **dadurch gekennzeichnet, dass** an der Werkstückaufnahme (13) oder dem Werkstückspindelsystem ein an die elektronische Steuerung (1) angeschlossener Drehwinkelsensor (6) angeordnet ist.

18. Vorrichtung nach einem der vorhergehenden Ansprüche 13 bis 17, **dadurch gekennzeichnet, dass** eine hohle Werkstückspindel (10) vorhanden ist.

19. Vorrichtung nach einem der vorhergehenden Ansprüche 13 bis 18, **dadurch gekennzeichnet, dass** ein optisches System (7) innerhalb oder neben einer hohlen Werkstückspindel (10) und eines optischen Elementes (5) angeordnet ist.

20. Vorrichtung nach einem der vorhergehenden Ansprüche 13 bis 19, **dadurch gekennzeichnet, dass** ein zweiachsiger Werkzeugvorschub (2) vorhanden ist.

21. Vorrichtung nach einem der vorhergehenden Ansprüche 13 bis 20, **dadurch gekennzeichnet, dass** das/die optische(n) System(e) (7) in Bezug zur Drehachse (11) der Werkstückaufnahme (13) oder zu dem bestimmten Neigungswinkel von optischer Achse (14) oder ebener Fläche verschieb- oder verschwenkbar angeordnet ist/sind.

## Claims

1. Method for producing reference surfaces on mounts of optical elements by machining,
the mount engaging radially externally on optical elements and fixing the optical elements,
**characterized in that**, to produce reference surfaces (4') which are oriented at presettable angles with respect to the optical axis (14) and/or a plane surface of optical elements (5),
the angle of inclination of the optical axis (14) and/or the plane surface of the respective optical elements (5) with respect to axis coordinates of a machining tool (3), having a two-axis feed (2) and a workpiece holder (13) for the mount (4) with optical element(s) (5),
is determined in a non-contact manner by means of at least one optical system (7) arranged on one side of the optical element(s) (5) and
the feed (2) of the tool (3) is controlled, taking into account the determined angle of inclination, to produce the reference surface (4').

2. Method according to Claim 1,
**characterized in that** the workpiece holder (13) with the mount (4) and optical element (5) is rotatably mounted and the angle of inclination is determined at presettable angles of rotation and the feed (2) of the tool (3) is controlled in dependence on the angle of rotation.

3. Method according to Claim 1 or 2,
**characterized in that** at least three reference surfaces are formed radially externally, at respective equidistant angular intervals, on the mount (4).

4. Method according to one of the preceding claims,
**characterised in that** cylindrical, frustoconical or frustopyramidal reference surfaces (4') or mounts having triangular or polygonal outer cross-sectional shapes are formed.

5. Method according to one of the preceding claims,
**characterised in that** a second reference surface oriented orthogonally to the reference surface (4') is formed.

6. Method according to one of the preceding claims,
**characterised in that** the angle of inclination of the optical axis (14) is determined by determining the decentring of the centre of curvature (C₁, C₂) of at least one curved optically active surface.

7. Method according to one of the preceding claims,
**characterised in that** the angle of inclination is determined by means of a mark attached to an optically active surface and by rotation of the mount (4) and optical element (5).

8. Method according to one of the preceding claims,
**characterised in that** the optical system (7) is displaced and/or pivoted for the and/or during the determination of the angle of inclination.

9. Method according to one of the preceding claims,
**characterised in that** the optical system (7) is displaced or pivoted with respect to the axis of rotation (11) of the workpiece holder (13) or with respect to the optical axis (14).

10. Method according to one of the preceding claims,
**characterised in that** the angle of inclination is determined using an optical detector (8) which measures with spatial resolution and is a component of the optical system (7).

11. Method according to one of the preceding claims,
**characterised in that** the reference surface(s) (4') is/are produced in a manner oriented with respect to a polarisation axis or polarisation plane of an optical element.

12. Method according to one of the preceding claims,
**characterised in that** the machining is carried out by turning, milling and/or grinding.

13. Device for producing reference surfaces on mounts of optical elements by machining, the reference surfaces being at a presettable angle with respect to the optical axis and/or a plane surface of optical elements, **characterised in that** a mount (4) with optical element (5) is held clamped by a workpiece holder (13) and
if the axis coordinates of the clamped mount (4) with optical element (5) are known, the angle of inclination of the optical axis (14) and/or the plane surface can be determined in a non-contact manner by means of at least one optical system (7) arranged on one side of the optical element (5), and
the optical system (7) transmits the determined angle(s) of inclination to an electronic controller (1) of the device, for controlling the feed (2) of a machining tool (3).

14. Device according to Claim 13,
**characterized in that** the optical system (7) is formed from an imaging optical part and an optical detector (8) which measures with spatial resolution.

15. Device according to Claim 13 or 14,
**characterized in that** a tunable autocollimator telescope is a component of the optical system (7).

16. Device according to one of the preceding Claims 13 to 15, **characterised in that** a rotatably mounted workpiece spindle system is present on the workpiece holder (13).

17. Device according to one of the preceding Claims 13 to 16, **characterised in that** an angle-of-rotation sensor (6) connected to the electronic controller (1) is arranged on the workpiece holder (13) or the workpiece spindle system.

18. Device according to one of the preceding Claims 13 to 17, **characterised in that** a hollow workpiece spindle (10) is present.

19. Device according to one of the preceding Claims 13 to 18, **characterised in that** an optical system (7) is arranged inside or beside a hollow workpiece spindle (10) and an optical element (5).

20. Device according to one of the preceding Claims 13 to 19, **characterised in that** a two-axis tool feed (2) is present.

21. Device according to one of the preceding Claims 13 to 20, **characterised in that** the optical system(s) (7) is/are arranged displaceably or pivotably with respect to the axis of rotation (11) of the workpiece holder (13) or the determined angle of inclination of optical axis (14) or plane surface.

## Revendications

1. Procédé de fabrication de surfaces de référence sur des montures d'éléments optiques par usinage,
dans lequel la monture s'engage sur des éléments optiques radialement à l'extérieur et fixe les éléments optiques,
**caractérisé en ce que**, pour fabriquer des surfaces de référence (4') qui sont orientées avec des angles prédéfinissables par rapport à l'axe optique (14) et/ou à une surface plane d'éléments optiques (5),
on détermine sans contact l'angle d'inclinaison de l'axe optique (14) et/ou de la surface plane des éléments optiques respectifs (5)
par rapport aux coordonnées axiales d'un outil d'usinage (3) avec une avance biaxiale (2) et un logement de pièce (13) pour la monture (4) avec le ou les éléments optiques (5)
au moyen d'au moins un système optique (7) agencé sur un côté du ou des éléments optiques (5) et
le mouvement d'avance (2) de l'outil (3) est commandé en tenant compte de l'angle d'inclinaison déterminé pour fabriquer la surface de référence (4').

2. Procédé selon la revendication 1,
**caractérisé en ce que** le logement de pièce (13) est monté à rotation avec la monture (4) et l'élément optique (5) et l'angle d'inclinaison est déterminé pour des angles de rotation prédéfinissables et l'avance (2) de l'outil (3) est commandée en fonction de l'angle de rotation.

3. Procédé selon la revendication 1 ou 2,
**caractérisé en ce qu'**au moins trois surfaces de référence sont formées radialement à l'extérieur avec des écarts angulaires respectivement équidistants sur la monture (4).

4. Procédé selon l'une quelconque des revendications précédentes, **caractérisé en ce que** l'on forme des surfaces de référence (4') en forme de cylindre, de tronc de cône ou de tronc de pyramide ou des montures ayant des formes en coupe transversale externes triangulaires ou polygonales.

5. Procédé selon l'une quelconque des revendications précédentes, **caractérisé en ce que** l'on forme une seconde surface de référence orientée orthogonalement à la surface de référence (4').

6. Procédé selon l'une quelconque des revendications précédentes, **caractérisé en ce que** l'on détermine l'angle d'inclinaison de l'axe optique (14) en déterminant le décentrage du centre de courbure (C₁, C₂) d'au moins une surface incurvée optiquement efficace.

7. Procédé selon l'une quelconque des revendications précédentes, **caractérisé en ce que** l'angle d'inclinaison est déterminé au moyen d'un repère appliqué sur une surface optiquement efficace et en faisant tourner la monture (4) et l'élément optique (5).

8. Procédé selon l'une quelconque des revendications précédentes, **caractérisé en ce que** le système optique (7) est soumis à un déplacement et/ou à un pivotement pour et/ou lors de la détermination de l'angle d'inclinaison.

9. Procédé selon l'une quelconque des revendications précédentes, **caractérisé en ce que** le système optique (7) est soumis à un déplacement ou à un pivotement par rapport à l'axe de rotation (11) du logement de pièce (13) ou par rapport à l'axe optique (14).

10. Procédé selon l'une quelconque des revendications précédentes, **caractérisé en ce que** l'angle d'inclinaison est déterminé avec un détecteur optique (8) mesurant en résolution spatiale et faisant partie du système optique (7).

11. Procédé selon l'une quelconque des revendications précédentes, **caractérisé en ce que** l'on élabore une ou des surfaces de référence (4') de manière orientée par rapport à un axe de polarisation ou un plan de polarisation d'un élément optique.

12. Procédé selon l'une quelconque des revendications précédentes, **caractérisé en ce que** l'usinage est réalisé par tournage, fraisage et/ou meulage.

13. Dispositif d'élaboration de surfaces de référence sur des montures d'éléments optiques par usinage, dans lequel les surfaces de référence présentent un angle prédéfinissable par rapport à l'axe optique et/ou à une surface plane d'éléments optiques,
**caractérisé en ce qu'**une monture (4) avec l'élément optique (5) est maintenue serrée avec un logement de pièce (13) et
**en ce que**, dans le cas de coordonnées axiales connues de la monture serrée (4) avec l'élément optique (5), l'angle d'inclinaison de l'axe optique (14) et/ou de la surface plane peut être déterminé sans contact au moyen d'au moins un système optique (7) agencé sur un côté de l'élément optique (5) et
**en ce que** le système optique (7) transmet le ou les angles d'inclinaison déterminés à une commande électronique (1) du dispositif pour commander le mouvement d'avance (2) d'un outil d'usinage (3).

14. Dispositif selon la revendication 13,
**caractérisé en ce que** le système optique (7) est formé d'une pièce optique d'imagerie et d'un détecteur optique (8) mesurant en résolution spatiale.

15. Dispositif selon la revendication 13 ou 14,
**caractérisé en ce qu'**une lunette réglable par auto-collimation fait partie du système optique (7).

16. Dispositif selon l'une quelconque des revendications précédentes 13 à 15, **caractérisé en ce qu'**un système de broche porte-pièce monté à rotation est présent sur le logement de pièce (13).

17. Dispositif selon l'une quelconque des revendications précédentes 13 à 16, **caractérisé en ce qu'**un capteur d'angle de rotation (6) connecté à la commande électronique (1) est agencé sur le logement de pièce (13) ou sur le système de broche porte-pièce.

18. Dispositif selon l'une quelconque des revendications précédentes 13 à 17, **caractérisé en ce qu'**il y a une broche porte-pièce creuse (10).

19. Dispositif selon l'une quelconque des revendications précédentes 13 à 18, **caractérisé en ce qu'**un système optique (7) est agencé à l'intérieur ou à côté d'une broche porte-pièce creuse (10) et d'un élément optique (5).

20. Dispositif selon l'une quelconque des revendications précédentes 13 à 19, **caractérisé en ce qu'**il y a une avance d'outil biaxiale (2).

21. Dispositif selon l'une quelconque des revendications précédentes 13 à 20, **caractérisé en ce que** le ou les systèmes optiques (7) est/sont montés à déplacement ou à pivotement par rapport à l'axe de rotation (11) du logement de pièce (13) ou à l'angle d'inclinaison déterminé de l'axe optique (14) ou de la surface plane.
